# EUROPÄISCHE PATENTSCHRIFT

(11) **EP 4 240 980 B1**
(45) Veröffentlichungstag und Bekanntmachung des Hinweises auf die Patenterteilung: **23.10.2024**
(21) Anmeldenummer: 21786372.9
(22) Anmeldetag: 29.09.2021
(51) Int. Cl.: A47B 88/95, F16B 12/20

(54) **AUFDOPPLUNGSBESCHLAG UND ZUGEHÖRIGE ANORDNUNG MIT ZWEI AUFGEDOPPELTEN PLATTEN**
DOUBLING-UP FITTING AND ASSOCIATED ASSEMBLY HAVING TWO DOUBLED-UP PLATES
RACCORD DE DOUBLAGE ET ENSEMBLE ASSOCIÉ COMPORTANT DEUX PLAQUES DOUBLÉES

(30) Priorität: 04.11.2020 DE 202020106305 U
(43) Veröffentlichungstag der Anmeldung: 13.09.2023
(73) Patentinhaber: Häfele Berlin GmbH & Co KG, 12307 Berlin (DE)
(72) Erfinder: SAWATZKI, Gerd, 45711 Datteln (DE); MERZ, Ulrich, 93059 Regensburg (DE)
(74) Vertreter: Kohler Schmid Möbus Patentanwälte
(86) Internationale Anmeldenummer: PCT/EP2021/076765
(87) Internationale Veröffentlichungsnummer: WO 2022/096199

(56) Entgegenhaltungen:
- WO-A1-2006/042564

## Beschreibung

Die Erfindung betrifft einen Aufdopplungsbeschlag zum Justieren und Fixieren von zwei aufeinander aufliegenden ("aufgedoppelten") Platten, insbesondere von Möbelplatten, wie z.B. Schubladenfronten, Seitenverkleidungen oder Blenden.

Aufdopplungsbeschläge dienen beispielsweise zur Befestigung einer Frontplatte am restlichen Möbelkorpus, z.B. eine Klappenbefestigung am Möbelkorpus, und werden üblicherweise mittels Gewindebolzen an den Möbelkorpus angeschraubt.

Dabei wird ein ringförmiges Beschlaggehäuse, das von einem Bolzenkopf des Gewindebolzens hintergriffen wird, in eine Sackbohrung der Frontplatte mit einem Einschlagwerkzeug (z.B. Hammer) eingeschlagen. Eine Hülsenmutter wird in eine Durchgangsbohrung im Möbelkorpus gesteckt und mit dem Gewindebolzen verschraubt. Der gegenüber dem Bolzendurchmesser größere lichte Öffnungsdurchmesser des Beschlaggehäuses erlaubt eine zweidimensionale Justierung der aufliegenden Frontplatte zum Möbelkorpus von z.B. ±2mm. Nach der Justierung wird die Hülsenmutter angezogen, bis die Frontplatte fest am Möbelkorpus anliegt. Bei diesen bekannten Aufdopplungsbeschlägen kann das Beschlaggehäuse nicht per Hand in die Sackbohrung eingesetzt werden, sondern muss mit einem Werkzeug eingeschlagen werden, um das Beschlaggehäuse fest in der Sackbohrung zu verankern. Ein gattungsgemäßer Aufdopplungsbeschlag ist bspw. aus der WO 2006/042564 A1 bekannt.

Demgegenüber liegt der Erfindung die Aufgabe zugrunde, einen Aufdopplungsbeschlag anzugeben, der leicht und einfach ohne Einschlagwerkzeug montiert werden kann.

Diese Aufgabe wird erfindungsgemäß durch einen Aufdopplungsbeschlag gelöst, der aufweist:
- ein Klammerelement mit einem Klammerboden und mit mindestens zwei jeweils endseitig vom Klammerboden hochstehenden Klammerarmen, deren freie Klammerenden nach innen abgewinkelt sind und den Klammerboden übergreifen,
- eine im Klammerelement zwischen dem Klammerboden und den freien Klammerenden angeordnete und drehbar gelagerte Spreizscheibe mit einer Scheibenöffnung, welche in eine zum Klammerboden hin offene Ausnehmung der Spreizscheibe mündet, deren Durchmesser größer als der Öffnungsdurchmesser der Scheibenöffnung ist, und mit mehreren, jeweils mit einem Klammerarm zusammenwirkenden Außenkonturabschnitten, die in einer Ausgangsdrehstellung der Spreizscheibe die freien Klammerenden weniger weit radial nach au-ßen aufspreizen als in einer Enddrehstellung, und
- eine in der Aufnahme der Spreizscheibe angeordnete Justierscheibe mit einem Gewinde,
wobei der Außendurchmesser der Justierscheibe kleiner als der Durchmesser der Ausnehmung der Spreizscheibe und größer als der Öffnungsdurchmesser der Scheibenöffnung ist.

Der erfindungsgemäße Aufdopplungsbeschlag erlaubt es, aufeinander aufliegende, aufgedoppelte Platten, wie z.B. Schubladenfronten, Seitenverkleidungen oder Blenden, zweidimensional zu justieren und in der jeweils justierten Position zu fixieren. Die Aufdopplungsbeschlag lässt sich per Hand, also werkzeuglos, in eine Bohrung in einer der beiden Platten einsetzen und darin verankern, indem durch Verdrehen der Spreizscheibe die Klammerarme aufgespreizt werden.

Vorzugsweise weisen die freien Klammerenden mindestens einen radial nach au-ßen vorstehende Vorsprung auf, der sich in eine Bohrungswand eindrücken oder einschneiden kann.

Besonders bevorzugt weisen die freien Klammerenden jeweils einen Basisabschnitt und ein- oder beidseitig einen sich daran in einer Drehrichtung der Spreizscheibe anschließenden Seitenarm auf, der sich in Drehrichtung der Spreizscheibe erstreckt und durch die Außenkonturabschnitte der Spreizscheibe radial nach außen ausgelenkt werden.

Die Justierscheibe kann vorteilhaft als Stufenscheibe mit zwei Durchmessern ausgebildet sein, wobei der Scheibenteil mit dem kleineren Außendurchmesser innerhalb der Scheibenöffnung der Spreizscheine angeordnet ist und der kleinere Außendurchmesser kleiner als der Öffnungsdurchmesser der Scheibenöffnung der Spreizscheibe ist.

Bevorzugt weist die Justierscheibe einen Zentrierpin auf, der in ein Loch des Klammerbodens eingreift, um die Justierscheibe am Klammerelement zu arretieren und so bei der späteren Bauteilmontage die Findung des Gewindes der Justierscheibe zu erleichtern.

Bei einer bevorzugten Ausführungsform weist der Außenrand der Spreizscheibe für jeden Klammerarm jeweils mindestens eine radial nach innen zurückgesetzte Rastaussparung auf, in welcher der Klammerarm in der Enddrehstellung der Spreizscheibe verrastet ist. Durch die Verrastung ist eine unbeabsichtigte Rücckehr in die Ausgangsdrehstellung ausgeschlossen.

Vorzugsweise sind jeweils drei Konturabschnitte und zwei Spreizarme vorhanden, um in beiden Drehrichtungen der Spreizscheibe ein Aufspreizen der zwei Spreizarme durch jeweils zwei der Konturabschnitte zu bewirken.

Als Handhabe zum manuellen Verdrehen der Spreizscheibe kann die Oberseite der Spreizscheibe vorteilhaft mindestens zwei Fingermulden aufweisen.

Besonders bevorzugt ist das Klammerelement durch Abkanten eines Metallblechzuschnitts gebildet.

Die Erfindung betrifft in einem weiteren Aspekt auch eine Anordnung mit zwei aufeinander liegenden Platten, insbesondere Möbelplatten, und mit einem wie oben ausgebildeten Aufdopplungsbeschlag, wobei der Aufdopplungsbeschlag mit dem Klammerboden voran in eine Bohrung, insbesondere Sackbohrung, in der einen, ersten Platte eingesetzt ist und die Klammerarme - durch Verdrehen der Spreizscheibe aus der Ausgangs- in die Enddrehstellung - radial nach außen gegen die Wand der Sackbohrung der ersten Platte aufgespreizt sind und wobei eine Schraube eine Bohrung in der anderen, zweiten Platte durchgreift und mit dem Gewinde der Justierscheibe verschraubt ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a-1c: eine Ansicht von oben auf den erfindungsgemäßen Aufdopplungsbeschlag in einer Drehausgangsstellung (Fig. 1a) und in einer Drehendstellung (Fig. 1b) sowie in einer Ansicht von unten (Fig. 1c) in einer Drehausgangsstellung;
- Fig. 2: eine Explosionsdarstellung des erfindungsgemäßen Aufdopplungsbeschlags; und
- Fig. 3: eine erfindungsgemäße Anordnung mit zwei mittels des Aufdopplungsbeschlags justierten, aufgedoppelten Möbelplatten.

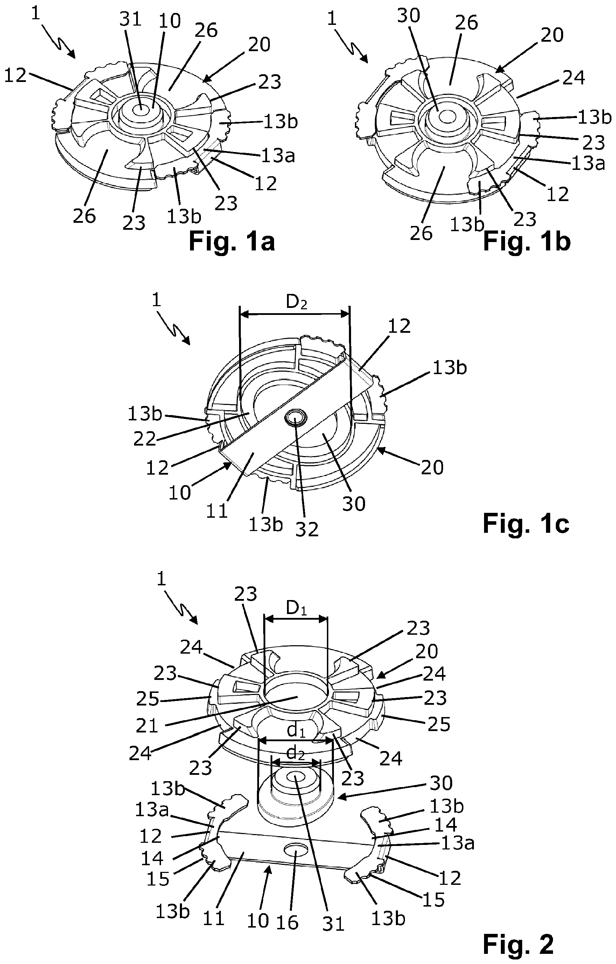

Der in **Fign. 1a-1c** und **2** gezeigte Aufdopplungsbeschlag **1** dient zum zweidimensionalen Justieren und Fixieren von zwei aufgedoppelten Möbelplatten, wie z.B. Schubladenfronten, Seitenverkleidungen oder Blenden.

Der Aufdopplungsbeschlag 1 weist folgende Einzelteile auf:
- ein Klammerelement **10** mit einem Klammerboden **11** und mit zwei jeweils endseitig vom Klammerboden 11 hochstehenden Klammerarmen **12,** deren freie Klammerenden **13a, 13b** nach innen abgewinkelt sind und den Klammerboden 11 übergreifen,
- eine im Klammerelement 10 zwischen dem Klammerboden 11 und den freien Klammerenden 13a, 13b angeordnete und drehbar gelagerte Spreizscheibe **20** mit einer Scheibenöffnung **21,** welche in eine zum Klammerboden 11 hin offene Ausnehmung **22** der Spreizscheibe 20 mündet, deren Durchmesser **D2** größer als der Öffnungsdurchmesser **D1** der Scheibenöffnung 21 ist, und mit mehreren (hier drei), jeweils mit einem Klammerarm 12 zusammenwirkenden Außenkonturabschnitten **23,** die in der in Fig. 1a gezeigten Ausgangsdrehstellung der Spreizscheibe 20 die freien Klammerenden 13a, 13b weniger weit radial nach außen aufspreizen als in der in Fig. 1b gezeigten Enddrehstellung, und
- eine in der Aufnahme 22 der Spreizscheibe 20 angeordnete Justierscheibe **30** mit einem z.B. mittig angeordneten Innengewinde **31.**

Die Justierscheibe 30 kann als einfache Scheibe mit Außendurchmesser d1 oder, wie im Ausführungsbeispiel gezeigt, als Stufenscheibe mit Außendurchmessern **d1, d2** ausgeführt sein. Das Scheibenteil mit dem kleineren Außendurchmesser d2 ist in der Scheibenöffnung 21 der Spreizscheibe 20 angeordnet und weist das Innengewinde 31 auf. Der größere Außendurchmesser d1 der Justierscheibe 30 ist, z.B. um 4 mm, kleiner als der Durchmesser D2 der Ausnehmung 22 der Spreizscheibe 20, und der kleinere Außendurchmesser d2 ist ebenfalls entsprechend kleiner als die Scheibenöffnung 21, wodurch die Justierscheibe 30 innerhalb der Ausnehmung 22 zweidimensional, im obigen Beispielfall also um ±2 mm, verschiebbar gelagert ist. Der Außendurchmesser d1 der Justierscheibe 30 ist größer als der Öffnungsdurchmesser D1 der Scheibenöffnung 21, wodurch die Justierscheibe 30 die Spreizscheibe 20, gesehen in einer Richtung fort vom Kammerboden 11 hin zur Justierscheibe 30, hintergreift.

Die freien Klammerenden weisen jeweils einen mittleren Basisabschnitt 13a auf, an den sich beidseitig ringsegmentförmige Seitenarme 13b anschließen, welche sich in jeweils eine der beiden Drehrichtungen der Spreizscheibe 20 erstrecken. Der Basisabschnitt 13a und die beiden Seitenarme 13b erstrecken sich radial nach innen, um den Klammerboden 11 zu übergreifen. Gegenüber den radial nach innen weisenden Innenränder der Seitenarme 13b ist der radial nach innen weisende Innenrand des mittleren Basisabschnitts 13a radial nach außen zurückversetzt, um so eine Aussparung **14** auszubilden. Die radial nach außen weisenden Außenränder der beiden Seitenarme 13b sind mit schneidenförmigen Vorsprüngen **15** versehen. Optional kann im Klammerboden 11 ein mittiges Loch **16** für einen Zentrierpin **32** der Justierscheibe 30 vorgesehen sein. Das Klammerelement 10 ist vorzugsweise durch Abkanten eines Metallblechzuschnitts gebildet.

Der Außenrand der Spreizscheibe 20 weist für jeden Klammerarm 12 jeweils zwei radial nach innen zurückgesetzte Rastaussparung **24** und dazwischen einen nicht radial nach innen zurückgesetzten Randabschnitt **25** auf. Über zwei oberseitige Fingermulden **26** kann die Spreizscheibe 20 gegenüber dem Klammerelement 10 in beide Richtungen verdreht werden.

In der in Fign. 1a, 1c gezeigten Ausgangsdrehstellung des Aufdopplungsbeschlags 1 liegen einerseits die beiden Klammerarme 12 - jeweils gegen die Wirkung einer radial nach innen gerichteten, elastischen Rückstellkraft - an den Randabschnitten 25 der Spreizscheibe 20 an und liegen andererseits mittleren Basisabschnitte 13a der Klammerenden 12 jeweils mit ihrem Innenrand an den Randabschnitten 25 an.

Durch Verdrehen der Spreizscheibe 20 in eine der beiden Drehrichtungen (in Fig. 1b durch Drehen entgegen dem Uhrzeigersinn) wird der Aufdopplungsbeschlag 1 in die Fig. 1b gezeigte Enddrehstellung gedreht. In dieser Enddrehstellung sind einerseits die beiden Klammerarme 12 - durch die Wirkung der Rückstellkraft - radial nach innen in die jeweiligen Rastaussparungen 24 der Spreizscheibe 20 eingerastet, und andererseits die Seitenarme 13b der Klemmarme 12 durch den mittleren und einen der beiden äußeren Konturabschnitte 23 radial nach außen ausgelenkt.

Statt dem gezeigten Innenwinde 31 kann die Justierscheibe 30 alternativ auch ein Außengewinde aufweisen. So könnte im Falle einer Stufenscheibe beispielsweise das Scheibenteil mit dem kleineren Außendurchmesser d2 ein Außengewinde aufweisen.

Statt wie gezeigt dreiteilig kann der Aufdopplungsbeschlag 1 auch zweiteilig ausgebildet sein, indem die Spreiz- und Justierscheiben 20, 30 zunächst als ein gemeinsames Spritzgussteil mit einer oder mehreren Sollbruchstellen gefertigt sind, welche dann bei der Montage durch eine Verschiebung der Justierscheibe 30 gegenüber der Spreizscheibe 20 aufgebrochen werden.

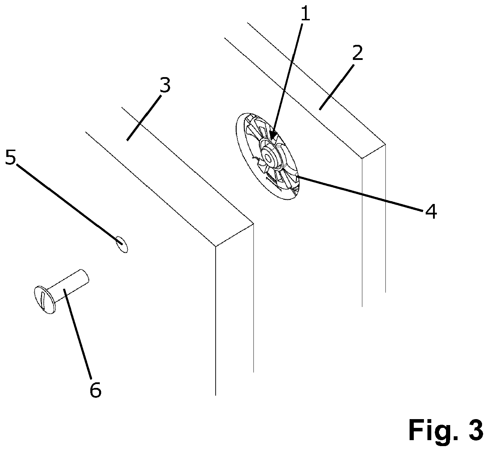

In **Fig. 3** ist eine Anordnung mit zwei aufeinander aufliegenden ("aufgedoppelten"), mittels des Aufdopplungsbeschlags 1 justierten und fixierten Möbelplatten **2, 3** gezeigt. In die außenseitige Möbelplatte 2 (z.B. aus Holzwerkstoff) ist eine Sackbohrung **4** mit einem dem Aufdopplungsbeschlag 1 entsprechenden Bohrungsdurchmesser (z.B. 30 mm) und in die innenseitige Möbelplatte 3 eine (Durchgangs)Bohrung **5** für eine Schraube **6** gebohrt.

Der in Ausgangsdrehstellung befindliche Aufdopplungsbeschlag 1 wird mit dem Klammerboden 11 voran in die Sackbohrung 4 der außenseitigen Platte 2 eingesetzt, wodurch das Klammerelement 10 durch seine Vorsprünge 15 bereits drehfest in der Sackbohrung 4 vorfixiert ist. In dieser Ausgangsdrehstellung ist die Justierscheibe 30 durch den Zentrierpin 32 mittig am Klammerelement 8 arretiert, um bei der späteren Bauteilmontage die Lochfindung des Innengewindes 31 zu erleichtern.

Durch manuelles Verdrehen der Spreizscheibe 20 aus der Ausgangs- in die Enddrehstellung werden die Seitenarme 13b des Klammerelements 10, wie oben beschrieben, radial nach außen aufgespreizt und somit die Vorsprünge 15 in die Wand der Sackbohrung 4 hineingedrückt, wodurch der Aufdopplungsbeschlag 1 in der Sackbohrung 4 fest verankert ist. Die durch die Bohrung 5 der innenseitigen Platte 3 greifende Schraube 6 wird in das Innengewinde 31 der Justierscheibe 30 eingeschraubt, bis die beiden aneinander liegenden Platten 2, 3 mittels der Justierscheibe 30 gegeneinander verspannt sind, welche die in der außenseitigen Platte 2 verankerte Spreizscheibe 30 in Zugrichtung der Schraube 5 hintergreift und somit die außenseitige Platte 2 gegen die innenseitige Platte 3 zieht. Dabei wird der Zentrierpin 32 aus dem Loch 16 des Klammerbodens 11 herausgehoben und somit die Arretierung der Justierscheibe 30 aufgehoben.

Vor dem finalen Anziehen der beiden Platten 2, 3 erlaubt der gegenüber dem Durchmesser D2 der Aufnahme 22 der Spreizscheibe 20 kleinere Außendurchmesser d1 der Justierscheibe 30 eine zweidimensionale Justierung der aufeinander aufliegenden Möbelplatten 2, 3 von z.B. ±2mm. Nach dem finalen Anziehen sind die justierten, aufgedoppelten Möbelplatten 2, 3 fest miteinander verbunden.

## Patentansprüche

1. Aufdopplungsbeschlag (1) aufweisend
- ein Klammerelement (10) mit einem Klammerboden (11) und mit mindestens zwei jeweils endseitig vom Klammerboden (11) hochstehenden Klammerarmen (12), deren freie Klammerenden (13a, 13b) nach innen abgewinkelt sind und den Klammerboden (11) übergreifen,
- eine im Klammerelement (10) zwischen dem Klammerboden (11) und den freien Klammerenden (13a, 13b) angeordnete und drehbar gelagerte Spreizscheibe (20) mit einer Scheibenöffnung (21), welche in eine zum Klammerboden (11) hin offene Ausnehmung (22) der Spreizscheibe (20) mündet, deren Durchmesser (D2) größer als der Öffnungsdurchmesser (D1) der Scheibenöffnung (21) ist, und mit mehreren, jeweils mit einem Klammerarm (12) zusammenwirkenden Außenkonturabschnitten (23), die in einer Ausgangsdrehstellung der Spreizscheibe (20) die freien Klammerenden (13a, 13b) weniger weit radial nach außen aufspreizen als in einer Enddrehstellung, und
- eine in der Aufnahme (22) der Spreizscheibe (20) angeordnete Justierscheibe (30) mit einem Gewinde (31),
wobei der Außendurchmesser (d1) der Justierscheibe (30) kleiner als der Durchmesser (D2) der Ausnehmung (22) der Spreizscheibe (20) und größer als der Öffnungsdurchmesser (D1) der Scheibenöffnung (21) ist.

2. Aufdopplungsbeschlag nach Anspruch 1, **dadurch gekennzeichnet, dass** die freien Klammerenden (13b) mindestens einen radial nach außen vorstehende Vorsprung (14) aufweisen.

3. Aufdopplungsbeschlag nach Anspruch 1 oder 2, **dadurch gekennzeichnet, dass** die freien Klammerenden (13a, 13b) jeweils einen Basisabschnitt (13a) und ein- oder beidseitig einen sich daran in einer Drehrichtung der Spreizscheibe (20) anschließenden Seitenarm (13b) aufweisen, der sich in Drehrichtung der Spreizscheibe (20) erstreckt.

4. Aufdopplungsbeschlag nach einem der vorhergehenden Ansprüche, **dadurch gekennzeichnet, dass** die Justierscheibe (30) als Stufenscheibe mit zwei Durchmessern (d1, d2) ausgebildet ist, wobei der Scheibenteil mit dem kleineren Außendurchmesser (d2) innerhalb der Scheibenöffnung (21) der Spreizscheibe (20) angeordnet ist und der kleinere Außendurchmesser (d2) kleiner als der Öffnungsdurchmesser (D1) der Scheibenöffnung (21) der Spreizscheibe (20) ist.

5. Aufdopplungsbeschlag nach einem der vorhergehenden Ansprüche, **dadurch gekennzeichnet, dass** die Justierscheibe (30) einen Zentrierpin (32) aufweist, der in ein Loch (15) des Klammerbodens (11) eingreift.

6. Aufdopplungsbeschlag nach einem der vorhergehenden Ansprüche, **dadurch gekennzeichnet, dass** der Außenrand der Spreizscheibe (20) für jeden Klammerarm (12) jeweils mindestens eine radial nach innen zurückgesetzte Rastaussparung (24) aufweist, in welcher der Klammerarm (12) in der Enddrehstellung der Spreizscheibe (20) verrastet ist.

7. Aufdopplungsbeschlag nach einem der vorhergehenden Ansprüche, **dadurch gekennzeichnet, dass** jeweils drei Konturabschnitte (23) und zwei Spreizarme (13b) vorhanden sind, um in beiden Drehrichtungen der Spreizscheibe (20) ein Aufspreizen der zwei Spreizarme (13b) durch jeweils zwei der Konturabschnitte (23) zu bewirken.

8. Aufdopplungsbeschlag nach einem der vorhergehenden Ansprüche, **dadurch gekennzeichnet, dass** die Oberseite der Spreizscheibe (20) mindestens zwei Fingermulden (26) aufweist.

9. Aufdopplungsbeschlag nach einem der vorhergehenden Ansprüche, **dadurch gekennzeichnet, dass** das Klammerelement (10) ein abgekanteter Metallblechzuschnitt ist.

10. Anordnung mit zwei aufeinander liegenden Platten (2, 3), insbesondere Möbelplatten, und mit einem Aufdopplungsbeschlag (1) nach einem der vorhergehenden Ansprüche, wobei der Aufdopplungsbeschlag (1) mit dem Klammerboden (11) voran in eine Bohrung (4), insbesondere Sackbohrung, in der einen, ersten Platte (2) eingesetzt ist und durch Verdrehen der Spreizscheibe (20) aus der Ausgangs- in die Enddrehstellung die Klammerarme (12) radial nach außen gegen die Wand der Bohrung (4) der ersten Platte (21) aufgespreizt sind und wobei eine Schraube (5) eine Bohrung (6) in der anderen, zweiten Platte (3) durchgreift und mit dem Gewinde (31) der Justierscheibe (30) verschraubt ist.

## Claims

1. A doubling-up fitting (1) comprising:
- a clamp element (10) with a clamp base (11) and with at least two clamp arms (12) which rise from the clamp base (11) at its respective ends, the free clamp ends (13a, 13b) of which are angled inward and extend over the clamp base (11);
- a rotatably mounted spreading disc (20) arranged in the clamp element (10) between the clamp base (11) and the free clamp ends (13a, 13b), with a disc opening (21) leading into a recess (22) in the spreading disc (20) which is open toward the clamp base (11) and the diameter (D2) of which is greater than the opening diameter (D1) of the disc opening (21), and with a plurality of outer contour portions (23) which each interact with a respective clamp arm (12) and spread the free clamp ends (13a, 13b) radially outward less far in an initial rotational position of the spreading disc (20) than in a final rotational position; and
- an adjusting disc (30) arranged in the recess (22) of the spreading disc (20) and having a thread (31);
wherein the outer diameter (d1) of the adjusting disc (30) is smaller than the diameter (D2) of the recess (22) in the spreading disc (20) and larger than the opening diameter (D1) of the disc opening (21).

2. The doubling-up fitting as claimed in claim 1, **characterized in that** the free clamp ends (13b) have at least one radially outwardly extending protrusion (14).

3. The doubling-up fitting as claimed in claim 1 or 2, **characterized in that** the free clamp ends (13a, 13b) each have a base portion (13a) and, on one or both sides, a side arm (13b) adjoining this in a rotation direction of the spreading disc (20) and extending in the rotation direction of the spreading disc (20).

4. The doubling-up fitting as claimed in any of the preceding claims, **characterized in that** the adjusting disc (30) is configured as a stepped disc with two diameters (d1, d2), wherein the disc part with the smaller outer diameter (d2) is arranged inside the disc opening (21) of the spreading disc (20), and the smaller outer diameter (d2) is smaller than the opening diameter (D1) of the disc opening (21) of the spreading disc (20).

5. The doubling-up fitting as claimed in any of the preceding claims, **characterized in that** the adjusting disc (30) has a centering pin (32) which engages in a hole (15) of the clamp base (11).

6. The doubling-up fitting as claimed in any of the preceding claims, **characterized in that** for each clamp arm (12), the outer edge of the spreading disc (20) has at least one radially inwardly set back latching cutout (24) in which the clamp arm (12) latches in the final rotational position of the spreading disc (20).

7. The doubling-up fitting as claimed in any of the preceding claims, **characterized in that** in each case three contour portions (23) and two spreading arms (13b) are present in order to achieve a spreading of the two spreading arms (13b) in each case by two of the contour portions (23) in both rotational directions of the spreading disc (20).

8. The doubling-up fitting as claimed in any of the preceding claims, **characterized in that** the top side of the spreading disc (20) has at least two finger depressions (26).

9. The doubling-up fitting as claimed in any of the preceding claims, **characterized in that** the clamp element (10) is a bent cut metal plate.

10. An assembly with two plates (2, 3) lying on one another, in particular two furniture plates, and with a doubling-up fitting (1) as claimed in any of the preceding claims, wherein the doubling-up fitting (1) with the clamp base (11) ahead is inserted in a bore (4), in particular a blind bore, in the one first plate (2), and by rotating of the spreading disc (20) from the initial into the final rotational position, the clamping arms (12) are spread radially outward against the wall of the bore (4) of the first plate (21), and wherein a screw (5) extends through a bore (6) in the other second plate (3) and is screwed to the thread (31) of the adjusting disc (30).

## Revendications

1. Raccord de doublage (1), présentant
- un élément formant agrafe (10) comprenant un fond d'agrafe (11) et comprenant au moins deux bras d'agrafe (12) qui s'élèvent respectivement à l'extrémité du fond d'agrafe (11) et dont les extrémités d'agrafe libres (13a, 13b) sont courbées vers l'intérieur et surplombent le fond d'agrafe (11),
- un disque d'écartement (20) monté rotatif, agencé dans l'élément formant agrafe (10) entre le fond d'agrafe (11) et les extrémités d'agrafe libres (13a, 13b), et comprenant un orifice de disque (21) qui débouche dans un évidement (22) du disque d'écartement (20), ledit évidement étant ouvert en direction du fond d'agrafe (11) et son diamètre (D2) étant supérieur au diamètre d'orifice (D1) de l'orifice de disque (21), et plusieurs sections de contour extérieur (23) qui coopèrent respectivement avec un bras d'agrafe (12) et, dans une position de rotation initiale du disque d'écartement (20), écartent les extrémités d'agrafe libres (13a, 13b) radialement vers l'extérieur dans une moindre mesure que dans une position de rotation finale, et
- un disque d'ajustement (30) muni d'un filetage (31) et agencé dans l'évidement (22) du disque d'écartement (20),
le diamètre extérieur (d1) du disque d'ajustement (30) étant inférieur au diamètre (D2) de l'évidement (22) du disque d'écartement (20) et étant supérieur au diamètre d'orifice (D1) de l'orifice de disque (21).

2. Raccord de doublage selon la revendication 1, **caractérisé en ce que** les extrémités d'agrafe libres (13b) présentent au moins une saillie (14) faisant saillie radialement vers l'extérieur.

3. Raccord de doublage selon la revendication 1 ou 2, **caractérisé en ce que** les extrémités d'agrafe libres (13a, 13b) présentent respectivement une section de base (13a) et un bras latéral (13b) qui s'y raccorde d'un côté ou des deux côtés dans un sens de rotation du disque d'écartement (20) et s'étend dans le sens de rotation du disque d'écartement (20).

4. Raccord de doublage selon l'une quelconque des revendications précédentes, **caractérisé en ce que** le disque d'ajustement (30) est réalisé sous la forme d'un disque étagé avec deux diamètres (d1, d2), la partie de disque avec le plus petit diamètre extérieur (d2) étant agencée à l'intérieur de l'orifice de disque (21) du disque d'écartement (20) et le plus petit diamètre extérieur (d2) étant inférieur au diamètre d'orifice (D1) de l'orifice de disque (21) du disque d'écartement (20).

5. Raccord de doublage selon l'une quelconque des revendications précédentes, **caractérisé en ce que** le disque d'ajustement (30) présente une broche de centrage (32) qui vient en prise dans un trou (15) du fond d'agrafe (11).

6. Raccord de doublage selon l'une quelconque des revendications précédentes, **caractérisé en ce que** le bord extérieur du disque d'écartement (20) présente pour chaque bras d'agrafe (12) respectivement au moins un évidement d'encliquetage (24) qui est radialement en retrait vers l'intérieur et dans lequel le bras d'agrafe (12) est encliqueté dans la position de rotation finale du disque d'écartement (20).

7. Raccord de doublage selon l'une quelconque des revendications précédentes, **caractérisé en ce que** respectivement trois sections de contour (23) et deux bras d'écartement (13b) sont présents afin, dans les deux sens de rotation du disque d'écartement (20), de provoquer un écartement des deux bras d'écartement (13b) grâce à respectivement deux des sections de contour (23).

8. Raccord de doublage selon l'une quelconque des revendications précédentes, **caractérisé en ce que** la partie supérieure du disque d'écartement (20) présente au moins deux trouées pour les doigts (26).

9. Raccord de doublage selon l'une quelconque des revendications précédentes, **caractérisé en ce que** l'élément formant agrafe (10) est une découpe de tôle pliée.

10. Ensemble comprenant deux plaques (2, 3) superposées, en particulier des plaques de meubles, et un raccord de doublage (1) selon l'une quelconque des revendications précédentes, le fond d'agrafe (11) du raccord de doublage (1) étant inséré dans un alésage (4), en particulier un alésage borgne, de la première plaque (2) et les bras d'agrafe (12) étant écartés radialement vers l'extérieur contre la paroi de l'alésage (4) de la première plaque (21) grâce à une rotation du disque d'écartement (20) à partir de la position de rotation initiale jusqu'à la position de rotation finale, et une vis (5) traversant un alésage (6) de la deuxième plaque (3) et étant vissée au filetage (31) du disque d'ajustement (30).
